# EUROPÄISCHE PATENTSCHRIFT

(11) **EP 1 130 983 B1**
(45) Veröffentlichungstag und Bekanntmachung des Hinweises auf die Patenterteilung: **02.08.2006**
(21) Anmeldenummer: 00964178.8
(22) Anmeldetag: 15.09.2000
(51) Int. Cl.: A45C 5/14

(54) **KOFFER**
SUITCASE
VALISE

(30) Priorität: 16.09.1999 DE 29916247 U; 23.11.1999 DE 29920502 U
(43) Veröffentlichungstag der Anmeldung: 12.09.2001
(73) Patentinhaber: Hammesfahr, Guido, 50670 Köln (DE)
(72) Erfinder: Eckart, Peter, 60322 Frankfurt am Main (DE)
(74) Vertreter: Hennicke, Ernst Rüdiger
(86) Internationale Anmeldenummer: PCT/EP2000/009039
(87) Internationale Veröffentlichungsnummer: WO 2001/019213

(56) Entgegenhaltungen:
- DE-A- 3 636 064
- FR-A- 1 292 341
- FR-A- 2 607 089
- PATENT ABSTRACTS OF JAPAN vol. 1996, no. 08, 30. August 1996 (1996-08-30) & JP 08 084617 A (TOKUYAMA TOMOYASU), 2. April 1996 (1996-04-02)

## Beschreibung

Die vorliegende Erfindung betrifft einen Koffer mit mindestens einem Griff und mindestens zwei einer Seitenkante einer Bodenfläche des Koffers zugeordneten, eine Transporthilfe bildenden Transportrollen und mit einer an der Außenseite einer Seitenwand des Koffers in einer ersten Grundstellung anordbaren, plattenförmigen Einheit, die zu einer zweiten Grundstellung durch eine erste Schwenkachse bringbar ist derart, daß sie bei auf der Bodenfläche aufstehendem Koffer in einem Winkel > 45° orientierbar ist, wobei die plattenförmige Einheit an ihrem freien Ende mindestens eine Laufrolle aufweist, deren Achse in der zweiten Grundstellung der plattenförmigen Einheit parallel zu den Achsen der Transportrollen verläuft und die in der zweiten Grundstellung die plattenförmige Einheit stützt, so daß die plattenförmige Einheit in der zweiten Grundstellung eine Standfläche zum Aufsetzen des Fußes einer Person bildet.

Koffer mit Rollen an einer Seitenkante einer Bodenfläche des Koffers und einem Griff sind allgemein bekannt. Ein solcher Koffer mit Transporthilfen in Form von Rollen ermöglicht ein bequemes Transportieren des Koffers, gerade dann, wenn er ein hohes Gewicht aufweist und insbesondere auf Flughäfen lange Strecken zurückgelegt werden müssen. Für den Transport über lange Wege wird der Koffer zunächst auf seine Bodenflächeaufgestellt. Dann wird üblicherweise ein Griff von einer Seitenwand des Koffers hervorgezogen und der Koffer wird an diesem Griff angehoben, so dass die Rollen Kontakt mit der Bodenfläche erhalten, und der Koffer an dem Griff gezogen werden kann.

Somit muss die Person, die mit dem Koffer unterwegs ist, in dieser Transportposition nur einen Teil des Gewichts des Koffers tragen, was die Fortbewegung über weite Strecken erheblich erleichtert.

Die Strecken, die heutzutage insbesondere auf Flughäfen zurückgelegt werden müssen, werden immer länger, da die Flughäfen stetig erweitert und vergrößert werden, um das schnell wachsende Flugverkehrsaufkommen bewältigen zu können. Um den Transport von Gepäck zu erleichtern, werden auf Flughäfen, aber auch auf Bahnhöfen, Gepäckwagen angeboten, auf denen das Gepäck dann aufgestellt werden kann. Solche Gepäckwagen sind aber nicht immer und an jedem Bereich eines Flughafens oder Bahnhofsverfügbar, Auch dürfen in Flughäfen solche Gepäckwagen nicht in allen Bereichen benutzt werden.

Aus der DE 36 36 064 A ist ein Koffer bekannt, der an seiner unteren Schmalseite an einer vorderen und einer hinteren Ecke je eine Rolle aufweist und mit einem Trittbrett versehen ist, das sich im unteren Bereich des Koffers aus einer aufragenden Seitenwand ausklappen läßt. Bei diesem bekannten Koffer können zusätzlich zu den beiden stimseitig angeordneten Rollen im mittleren Bereich der unteren Schmalseite des Koffers noch eine oder mehrere zusätzliche Rollen angeordnet sein. Bei dem bekannten Koffer sind alle Rollen an der Schmalseite des Koffers selbst angeordnet, das Trittbrett ist immer frei schwebend, wodurch es sehr schwierig ist, auf dem Trittbrett des Koffers die Balance zu halten und diesen sicher vorwärts zu bewegen.

Aus der gattungsbildenden JP 08 08 4617 A ist ein Koffer mit einem abklappbaren Trittbrett bekannt, auf das sich der Benutzer des Koffers mit einem Fuß stellen kann, um so schneller vorwärts zu kommen. Dieser bekannte Koffer ist aber kaum lenkbar und läßt sich somit nicht sicher über Gehwege, Bahnsteige oder durch Flughafenterminals manövrieren.

Der vorliegenden Erfindung liegt nun die Aufgabe zugrunde, einen Koffer der eingangs angegebenen Art so weiterzubilden, daß eine bessere Manövrierbarkeit des Gefährts beim Trittrollern mit der Vorrichtung gewährleistet wird.

Diese Aufgabe wird mit der Erfindung bei einem Koffer der gattungsgemäßen Art dadurch gelöst, daß die plattenförmige Einheit in der zweiten Grundstellung um eine zweite Schwenkachse schwenkbar gehalten ist, die senkrecht zu der ersten Schwenkachse verläuft,

Ein solcher Koffer kann mit einfachen Mitteln in einer kurzen Zeit so umgebaut werden, daß er gleichzeitig ein Fortbewegungsmittel darstellt. Alle wesentlichen Bauelemente, die dazu vorgesehen sind, sind in den Koffer integriert, so daß er in der ersten Grundstellung eine kompakte Einheit darstellt, die sich insbesondere in dem nutzbaren Gepäckvolumen nicht wesentlich von einem Koffer mit denselben Außenabmessungen unterscheidet.

Ausgehend von der ersten Grundstellung, in der der Koffer geeignet ist, ihn mit der Hand an dem Griff zu tragen und auch in einem Gepäckraum zu verstauen, wird der Koffer, um sich schnell fortbewegen zu können, auf dem Boden aufgestellt und die einer Seitenwand des Koffers zugeordnete plattenförmige Einheit, die im unteren Bereich des Koffers durch ein Scharnier geführt sein kann, nach unten geklappt. An dem hinteren, freien Ende dieser plattenförmigen Einheit befindet sich mindestens eine Laufrolle, die, zusammen mit der (den) an der Kofferkante angeordneten Transportrolle (n), eine rollbare Plattform bildet, In der zweiten Grundstellung ist die Plattform zu der Seitenwand des Koffers um einen Winkel grösser45°, vorzugsweise im Bereich von etwas kleiner als 90°, orientiert, Um sich dann mit diesem Koffer fortbewegen zu können, wird noch ein entsprechender Griff aus dem Koffer hervorgezogen, falls der Koffer nur eine geringe Höhe aufweist, so daß sich dann eine Person mit einem Fuß auf die plattenförmige Einheit aufstellt, mit den Händen den Griff ergreift und dann die plattenförmige Einheit mit dem zweiten, freien Fuß, der sich auf dem Boden abstützt, nach vorne bewegt. Es hat sich gezeigt, daß gerade in Flughäfen, wo große, ebene, glatte Oberflächen vorzufinden sind, mit einem solchen Koffer ein sehr schnelles Fortkommen möglich wird, auch dann, wenn der Koffer, vollgepackt, ein hohes Gewicht aufweist. Am Zielpunkt angekommen muß nur die plattenförmige Einheit in die erste Grundstellung überführt werden, wo die plattenförmige Einheit an einer Seitenwand des Koffers zur Anlage kommt. In dieser Stellung kann die plattenförmige Einheit mit geeigneten Mitteln, beispielsweise einem Riegel oder einer anderen Rasteinrichtung, fixiert werden, so daß sie fest der Seitenwand des Koffers zugeordnet ist. Falls ein ausziehbarer Griff an dem Koffer eingesetzt wird, wird dieser Griff dann wieder in den Koffer eingeschoben, so daß keine vorstehenden Teile vorhanden sind, die beim Transport des Koffers mit der Hand störend sein könnten. Mit dieser plattenförmigen Einheit wird das Gewicht des Koffers nur unwesentlich erhöht, da diese plattenförmige Einheit aus sehr leichten Materialien hergestellt werden kann und sie auch nur eine geringe Baugröße aufweist. Neben einer Platte sind auch Gitterstrukturen geeignet, so lange wie diese Teile dazu ausreichen, das Gewicht einer Person zu tragen. Es ist ersichtlich, daß mit einem solchen Koffer die Mobilität einer reisenden Person stark erhöht wird, insbesondere dann, wenn solche Reisen mit häufigen Zwischenstops auf Großraumflughäfen verbunden sind.

Es ist zu bevorzugen, daß die plattenförmige Einheit dem Koffer fest zugeordnet ist, d. h. sie sollte, um sie zwischen den beiden Grundstellungen zu bewegen, stets als ein fester Bestandteil des Koffers verbleiben. Um dies zu erreichen, kann die plattenförmige Einheit durch eine Schwenkachse geführt werden, die parallel zu den Achsen der Transportrollen ausgerichtet ist und die bevorzugt im unteren Bereich des Koffers, wenn dieser auf dem Boden aufsteht, positioniert ist.

Um das Gewicht des Koffers bei der Fortbewegung unter Benutzung der plattenförmigen Einheit auszubalancieren, werden die Transportrollen mittig zu der einen Seitenwand des Koffers ausgerichtet.

Um stabilere Laufeigenschaften zu erreichen, können die Transportrollen zu einer Transportwalze zusammengefaßt werden.

Um den Koffer dann, wenn er als fahrbare Einheit verwendet wird, in gewissem Umfang lenkbar zugestalten, ohne daß dazu aufwendige, konstruktive Maßnahmen er forderlich wären, ist die plattenförmige Einheit in der zweiten Grundstellung um eine zweite Schwenkachse, die senkrecht zu der ersten Schwenkachse verläuft, schwenkbar gehalten. Diese zweite Achse, die für das Erzielen eines gewissen Lenkverhaltens dient, kann parallel zur Fläche der Seitenwand verlaufen, so daß der Koffer bei der Fortbewegung in seiner Orientierung zu der plattenförmigen Einheit, über den Griff, nach links oder nach rechts verschwenkbar ist. Eine alternative Möglichkeit ist diejenige, die zweite Schwenkachse parallel zu der Fläche der plattenförmigen Einheit verlaufen zu lassen. Mit einer solchen Anordnung ist ein Verkippen der plattenförmigen Einheit relativ zu dem Koffer möglich, wodurch sich ein ausreichendes Lenkverhalten ergibt, um die Richtung beim Fortbewegen mit der plattenförmigen Einheit beeinflussen zu können.

Für den Koffer können mehrere Griffe vorgesehen sein, zum Beispiel einer, mit dem der Koffer mit der Hand getragen wird, und zum anderen ein solcher Griff, der dann benutzt wird, wenn eine Fortbewegung mittels der plattenförmigen Einheit gewünscht ist. Um allerdings das Gewicht des Koffers nicht zusätzlich zu erhöhen, sollte für beide Funktionen nur ein Griff vorgesehen werden, der in der zweiten Grundstellung der plattenförmigen Einheit derjenigen Seitenwand zugeordnet ist, zu der die plattenförmige Einheit unter einem Winkel ausgerichtet ist, so daß dann dieser Griff als Lenkhilfe dient.

Wie bereits ausgeführt ist, kann der Griff, der die Lenkhilfe bildet, ausziehbar und in verschiedenen Stellungen arretierbar angeordnet sein, so daß er einer Person, die den Koffer benutzt, angepaßt werden kann.

Da die plattenförmige Einheit sehr flach ausgebildet werden kann, ist es bevorzugt, der plattenförmigen Einheit eine Mulde in der Außenwand des Koffers zuzuordnen, in der die plattenförmige Einheit, wenn der Koffer mit der Hand getragen werden soll, einlegbar ist, so daß diese plattenförmige Einheit in die Seitenwand des Koffers integriert ist und nicht vorsteht. Je nach Art des Koffers, d. h. dem Format des Koffers, kann es erwünscht sein, die plattenförmige Einheit während des Transports des Koffers, d. h. in der ersten Grundstellung, einer schmalen Seitenwand des Koffers zuzuordnen, während es erwünscht sein kann, die plattenförmige Einheit dann, wenn sie sich in der zweiten Grundstellung befindet, einer breiten Seitenwand zuzuordnen. Um dies zu erreichen, ohne daß die plattenförmige Einheit von dem Koffer gelöst werden muß, um sie von der ersten Grundstellung zu der zweiten Grundstellung und wieder zurück von der zweiten Grundstellung in die erste Grundstellung zu überführen, wird an der Bodenfläche des Koffers eine Halteplatte angeordnet, die drehbar geführt ist. An dieser Halteplatte wird dann die plattenförmige Einheit mit ihrer Schwenkachse so befestigt, daß die plattenförmige Einheit beim Transport des Koffers einer Seitenwand zugeordnet ist, während dann, wenn die plattenförmige Einheit in eine Stellung gebracht werden soll, in der sie der anderen Seitenwand zugeordnet ist, sie von der Seitenwand heruntergeklappt wird und die Bodenplatte gedreht wird.

Es besteht weiterhin die Möglichkeit, um den Aufbau zu vereinfachen und eine leichtgewichtige Konstruktion zu erzielen, die erste und die zweite Schwenkachse in einem Gelenk zusammenzufassen, wobei es sich dann um eine Art Kugelgelenk handelt, Mittels dieses Kugelgelenks kann zum einen die plattenförmige Einheit zwischen der ersten und der zweiten Grundstellung verschwenkt werden, zum anderen bildet dieses Kugelgelenk auch eine Lenkachse, die ermöglicht, in der zweiten Grundstellung den Koffer und die plattenförmige Einheit in ihrer winkelmäßigen Orientierung zueinander zu verändern, um die Richtung der Fortbewegung zu beeinflussen.

Weitere Vorteile und Merkmale der Erfindung ergeben sich aus der nachfolgenden Beschreibung von Ausführungsbeispielen anhand der Zeichnung. In der Zeichnung zeigt
- Figur 1: eine schematische, perspektivische Ansicht einer ersten Ausführungsform, die nicht Teil der Erfindung ist, in einer Fortbewegungsstellung,
- Figur 2A: den Koffer der Figur 1 in einer Seitenansicht,
- Figur 2B: eine Ansicht des Koffers der Figur 2A aus Richtung des Sichtpfeils IIB in Figur 2A,
- Figur 2C: eine Draufsicht auf den Koffer der Figur 2A aus Richtung des Sichtpfeils 2C in Figur 2A,
- Figur 3: den Koffer der Figur 1 in drei Stellungen, die mit A, B und C bezeichnet sind, die den Vorgang darstellen, um die plattenförmige Einheit zwischen zwei Grundstellungen zu verändern,
- Figur 4A: eine weitere Anordnung der Verbindung zwischen dem Koffer und der plattenförmigen Einheit,
- Figur 4B: eine Detailansicht der Figur 4A, wie sie in Figur 4A mit IVB bezeichnet ist,
- Figuren 5 und 6: zwei Koffer, wobei die plattenförmige Einheit zum einen einer breiten Kofferseite und zum anderen einer schmalen Kofferseite zugeordnet ist,
- Figuren 7A bis 7C: eine weitere Ausführungsform des erfindungsgemäßen Koffers, bei dem die plattenförmige Einheit mit einer zusätzlichen Achse in der Fortbewe-gungsstellung geführt wird, darüber hinaus die plattenförmige Einheit beim Transport des Koffers in eine entsprechende Vertiefung in der Seitenwand des Koffers eingeschoben werden kann, und
- Figuren 8A und 8B: eine Ausführungsform, bei der die plattenförmige Einheit wahlweise für den Transport bzw. für die Fortbewegung einer schmalen Kofferseite oder einer breiten Kofferseite zugeordnet werden kann.

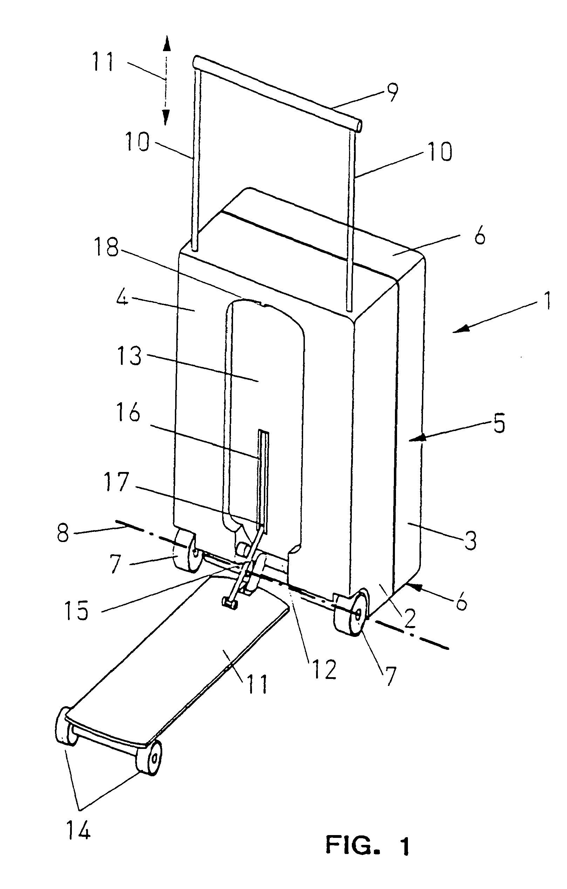

Der Koffer 1, wie ihn die Figur 1 zeigt, ist aus zwei schalenförmigen Teilen, einer Unterschale 2 und einer Oberschale 3, zusammengesetzt, wobei die Oberschale 3 einen Deckel bildet, der mit nicht näher dargestellten Scharnierteilen an der Unterschale 2 befestigt ist. Die Oberschale 3 weist eine rechteckige Grundfläche 4 auf. Die Seitenwände 5, die jeweils durch die Unterschale und die Oberschale 2, 3 gebildet sind, besitzen eine Breite, die schmaler ist als die Breite der Grundfläche 4. Dieser Koffer besitzt an seiner unteren Kante der schmalen Seitenfläche 6 zwei Transportrollen 7, deren Achsen 8, durch eine strichpunktierte Linie angedeutet, parallel zu der Ebene der rechteckigen Grundfläche 4 verlaufen. Die Außenseiten der beiden Transportrollen 7 sind in der Ebene der jeweiligen langen Seitenfläche 5 verlaufend. An der oberen, schmalen Seitenfläche 6 des Koffers 1 befindet sich ein Griff 9, der an zwei Führungsstäben 10 gehalten ist. Diese Führungsstäbe 10 sind in Richtung des Doppelpfeils 11 verschiebbar und können in unterschiedlichen Stellungen arretiert werden, so daß der Griff 9 in seiner Höhe oberhalb des Bodens, auf dem der Koffer aufsteht, positioniert werden kann. Die Führungsstäbe 10 befinden sich nahe der Grundfläche 4.

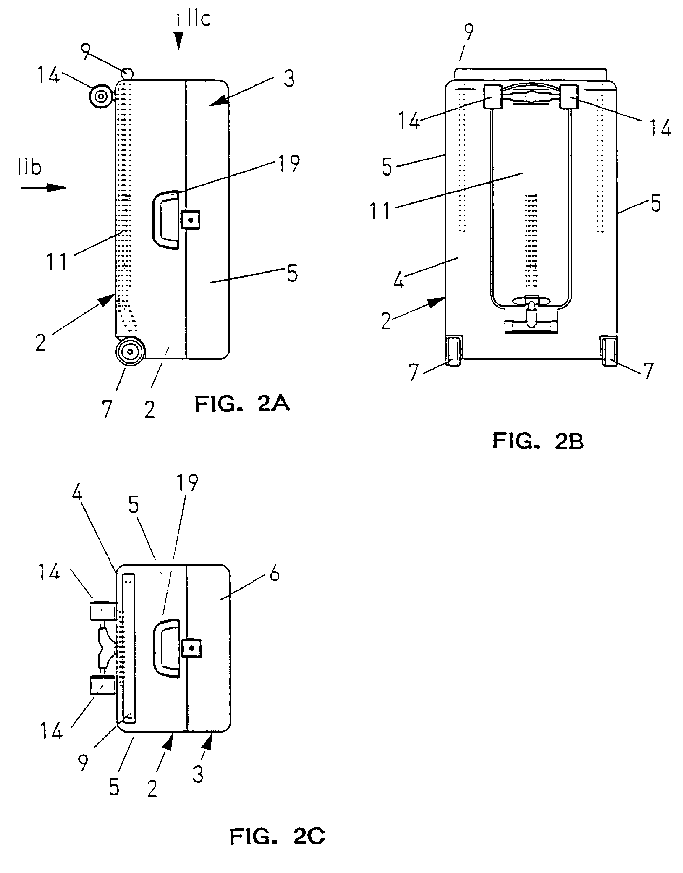

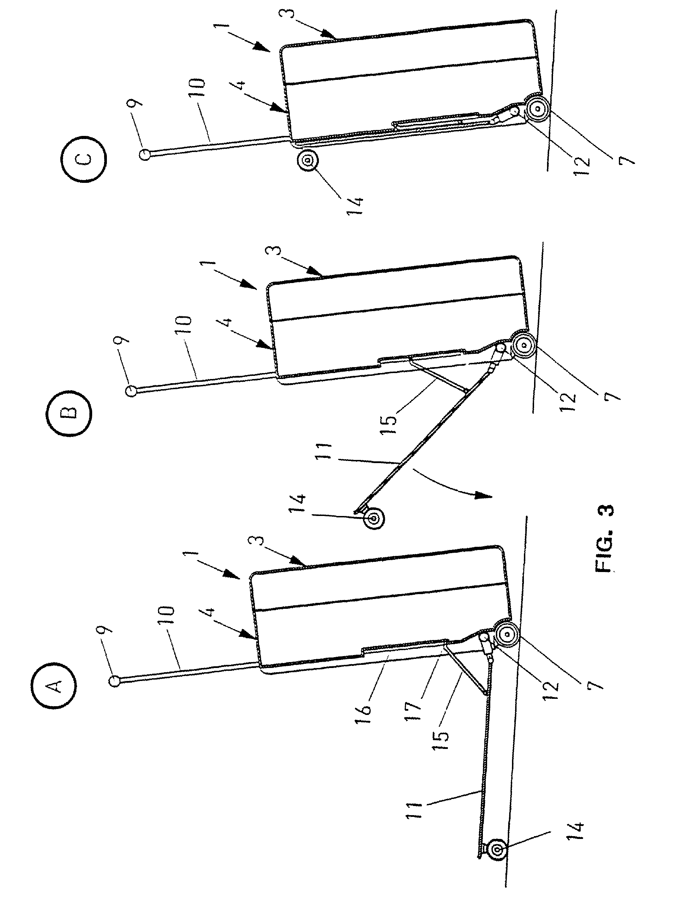

Um den Transport des Koffers 1, wie er in Figur 1 zu sehen ist, zu erleichtern, kann er an dem Griff 9 ergriffen werden, um ihn auf den Transportrollen 7 zu ziehen. Falls der Koffer verstaut werden soll, wird der Griff 9 zu der Seitenfläche 6 hin verschoben, so daß der Griff 9 auf der Seitenfläche zur Anlage gelangt, wie dies auch in Figur 2A bzw. Figur 3, die Ansicht "C", gezeigt ist.

Um mit diesem Koffer 1, wie er in den Figuren 1 bis 3 zu sehen ist, große Strecken zurückzulegen, insbesondere in Flughäfen, ist der Koffer 1 mit einer plattenförmigen Einheit 11 ausgestattet, die im Bereich der unteren Kante der rechteckigen Grundfläche 4 mittels einer ersten Schwenkachse 12 gehalten ist. Die Schwenkachse 12 verläuft parallel zu den Achsen 8 der Transportrollen. Für den normalen Transport des Koffers ist die plattenförmige Einheit 11 um die Schwenkachse 12 nach oben geschwenkt, so daß sie in einer Vertiefung 13 einliegt, wie in den Figuren 2A, 2B und 2C sowie in Figur 3C jeweils zu sehen ist. Ausgehend von dieser ersten Grundstellung kann die plattenförmige Einheit, wie in den Abläufen der Figur 3 zu sehen ist, nach Lösen aus einer Verriegelung 20 um die erste Schwenkachse 12 nach unten geschwenkt werden, bis die plattenförmige Einheit 11 in einer vorgegebenen Winkelstellung zu der rechteckigen Grundfläche 4 ausgerichtet ist, wie dies in Figur 3A zu sehen ist. Der Winkel, den die plattenförmige Einheit 11 zu der Grundfläche 4 bildet, beträgt in dieser Ausführungsform etwa 80°.

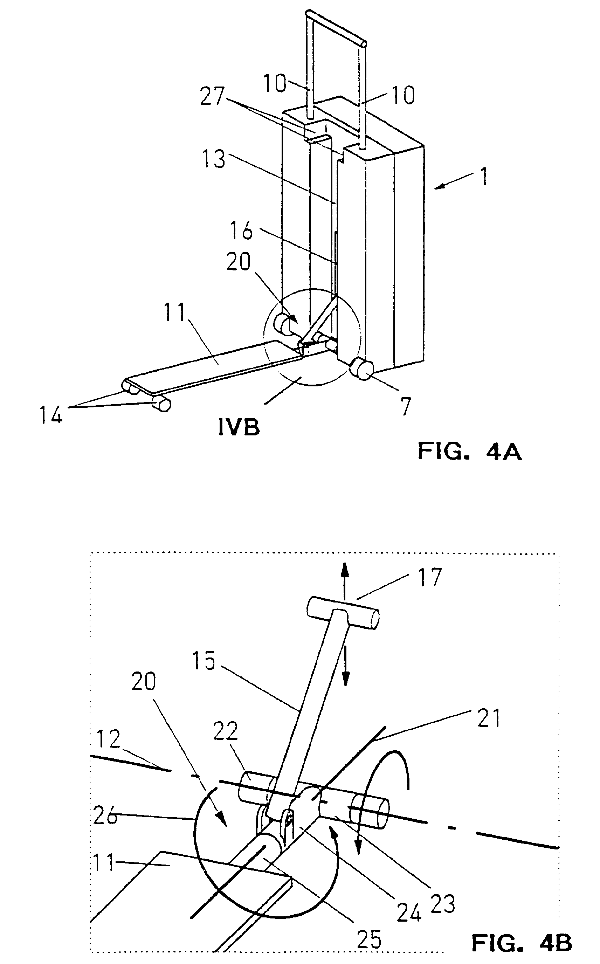

An dem hinteren, freien Ende der plattenförmigen Einheit 11 sind zwei Laufrollen 14 angeordnet, die in der ausgeklappten, zweiten Grundstellung der plattenförmigen Einheit 11 auf einer Bodenfläche zur Auflage gelangen. Zusammen mit den Transportrollen 7, die dem Koffer 1 zugeordnet sind, bildet die plattenförmige Einheit 11 eine rollende Plattform, auf der der Fuß einer Person aufgesetzt werden kann. Um die plattenförmige Einheit 11 in der zweiten, ausgeklappten Grundstellung zu fixieren, ist ein Führungsstab 15 angebracht, der zum einen an der plattenförmigen Einheit 11, nahe der Schwenkachse 12, schwenkbar gehalten ist, und der mit seinem anderen Ende in einer Führungsnut 16 geführt ist. Diese Führungsnut 16 verläuft mittig in der Vertiefung 13, wobei in der zweiten Grundstellung der plattenförmigen Einheit 11 das in der Führungsnut geführte Ende 17, das T-förmig ausgebildet ist, in eine entsprechende Nut einrastet (siehe auch Figur 4B).

Um sich mit dieser Koffer-Einheit fortzubewegen, wie sie in den Figuren 1 bis 3 dargestellt ist, wird der eine Fuß auf die Oberseite der plattenförmigen Einheit 11 aufgestellt, der Griff 9 wird ergriffen und der freie Fuß wird dazu verwendet, sich auf dem Boden abzustoßen. Auf diese Art und Weise ist ein schnelles Fortkommen, falls dies erforderlich ist, möglich.

Wie in Figur 3A zu erkennen ist, ist der Koffer 1 in der zweiten Grundstellung der plattenförmigen Einheit 11 von der Bodenfläche frei bzw. der Koffer ist aufgrund der winkelmäßigen Ausrichtung der plattenförmigen Einheit 11 zu der rechteckigen Grundfläche 4 leicht geneigt. Der Neigungswinkel des Koffers wird bevorzugt so eingestellt, daß der Schwerpunkt des Koffers oberhalb der Transportrollen 7 bzw. zwischen der Transportrolle 7 und den Laufrollen 14 liegt, so daß die Einheit 11 auch dann, wenn keine Person auf der plattenförmigen Einheit 11 steht, in der in Figur 3A gezeigten Stellung verbleibt.

Falls die plattenförmigen Einheit 11 für eine schnelle Fortbewegung nicht mehr benötigt wird, wird, ausgehend von der Stellung, wie sie in Figur 3A gezeigt ist, das T-förmige Ende 17 des Führungsstabs 15 in dem unteren Bereich der Führungsnut 16 gelöst und nach oben geklappt, wie in Figur 3B und 3C zu sehen ist, so daß die plattenförmigen Einheit 11 wieder in der Vertiefung 13 zur Anlage gelangt. Die plattenförmigen Einheit 11 wird dann verriegelt, wozu die in Figur 1 angedeutete Verriegelungsnase 18 dienen kann. In dieser Anordnung kann dann der Koffer 1 als an dem Griff 9 ziehbare und auf den Transportrollen 7 laufende Einheit fortbewegt werden. Es ist aber auch möglich, den Koffer zu tragen, wozu zusätzliche Handgriffe 19 an der oberen, schmalen Seitenfläche 6 oder der seitlichen, langen Seitenfläche 5 angeordnet sein können, wie in den Figuren 2A und 2C zu sehen ist.

Es ist ersichtlich, daß die fahrbare Koffereinheit, wie sie in den Figuren 1 bis 3 dargestellt ist, nur eine begrenzte Lenkbarkeit besitzt. Um die Lenkbarkeit zu verbessern, ist bei der Ausführungsform, wie sie in den Figuren 4A und 4B gezeigt ist, die Verbindungseinheit zwischen der plattenförmigen Einheit 11 und dem Koffer 1, in Figur 4B mit dem Bezugszeichen 20 bezeichnet, mit einer zusätzlichen Schwenkachse 21, durch eine strichpunktierte Linie in Figur 4B angedeutet, die eine Detaildarstellung der Anordnung der Figur 4A zeigt, versehen. Diese Verbindungseinheit 20 ist aus einem T-förmigen Rohr aufgebaut, wobei der eine Querschenkel 22 die bereits anhand der Figur 1 beschriebene erste Schwenkachse 12 bildet, mit der diese Verbindungseinheit 20 an dem Koffer gehalten ist, während der andere Schenkel 23 in einen hinteren Bereich 24, der fest mit dem QuerSchenkel 21 verbunden ist, und einen vorderen Bereich 25 unterteilt ist. Der vordere Bereich 25 ist mit dem hinteren Bereich 24 über eine nicht näher dargestellte Achse verbunden, so daß er gegen den hinteren Bereich 24 um die zweite Achse 21 schwenkbar ist, wie durch die Schwenkpfeile 26 angedeutet ist. Somit kann die mit dem vorderen Bereich 25 des Schenkels 23 verbundene plattenförmigen Einheit 11 gegen den Koffer 1 verkippt werden, indem entweder das Gewicht der auf der plattenförmigen Einheit 11 stehenden Person verlagert wird oder der Koffer 1, an dem Griff 9 gehalten, nach links oder nach rechts gekippt wird.

Die Ausführungsform gemäß der Figuren 4A und 4B besitzt eine gegenüber der Ausführungsform der Figur 1 tiefere Vertiefung 13, so daß dann, wenn die plattenförmigen Einheit 11 in dieser Vertiefung 13 einliegt, die Räder 14 in entsprechenden Ausnehmungen 27 an dem oberen Ende der Vertiefung 13 einliegen, so daß diese nicht, im Gegensatz zu der ersten Ausführungsform, wie insbesondere Figur 3A zeigt, über die Grundfläche 4 vorstehen.

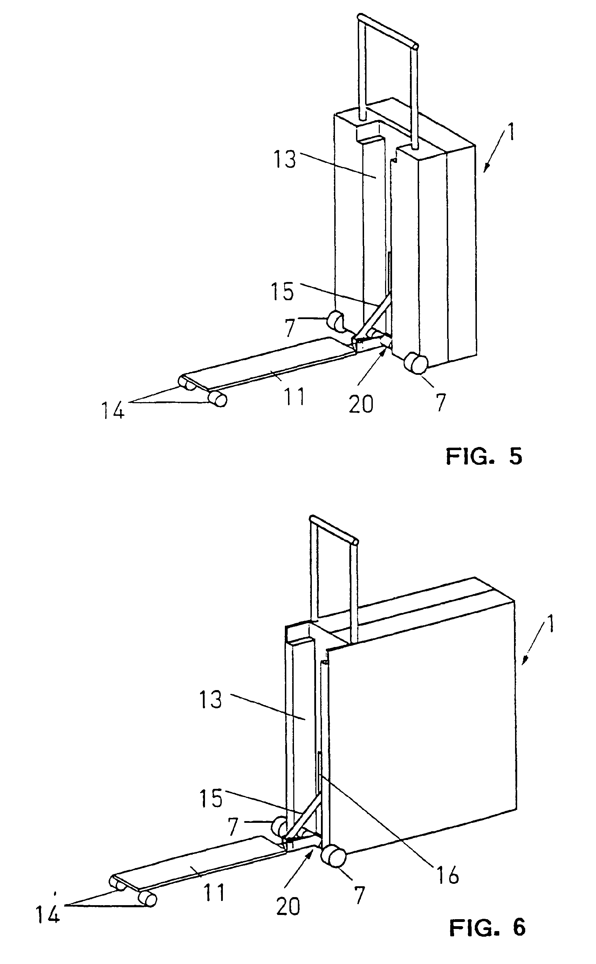

Wie in den Ausführungsformen der Figuren 5 und 6 zu sehen ist, kann die plattenförmigen Einheit 11 einer breiten Seite eines Koffers 1 zugeordnet werden, wie dies die Figur 5 zeigt, oder aber einer schmalen Seite, wie dies die Figur 6 zeigt. Bevorzugt wird allerdings eine Anordnung gewählt, wie sie die Figur 5 zeigt bzw. anhand der Figuren 1 bis 4 bereits beschrieben wurde, bei der der Koffer mit seiner geringsten Breite in Fahrtrichtung ausgerichtet wird, um eine kompakte Anordnung zu bilden.

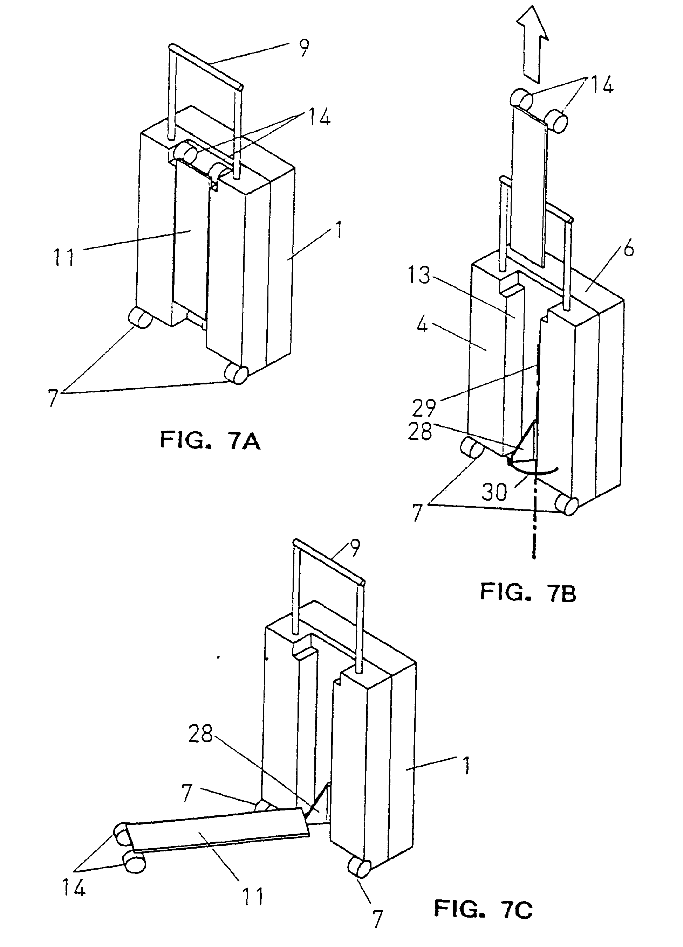

In den Figuren 7A bis 7C ist eine weitere Ausführungsform eines Koffers 1 dargestellt, bei der, im Gegensatz zu den zuvor beschriebenen Ausführungsformen, die plattenförmige Einheit 11 in eine Vertiefung 13, die bis zu der oberen, schmalen Seitenfläche 6 reicht, von oben eingesteckt wird, wozu die plattenförmigen Einheit 11 und die Ränder der Vertiefung 13 mit aneinander angepaßten Nut- und Federführungen ausgebildet sind. Um den Koffer 1 ausgehend von einer normalen Transportanordnung, wie sie in der Figur 7A gezeigt ist, zu einer rollbaren Einheit umzugestalten, wird die plattenförmigen Einheit 11 nach oben aus der Vertiefung 13 herausgezogen, wie dies die Figur 7B zeigt, und dann an einer Verbindungseinheit 27, die von ihrer Funktionsweise der Verbindungseinheit 20 der Figur 4A entspricht, mit geeigneten Befestigungsmitteln befestigt. Die Verbindungseinheit 27 besitzt ein dreieckförmiges Plattenteil 28, das um eine Achse 29 schwenkbar ist, wobei die Achse 29 in einer Ebene verläuft, die parallel zu der durch die Grundfläche 4 aufgespannten Fläche gebildet ist. Das dreieckförmige Plattenteil 28 liegt für den Transport des Koffers 1 an der Bodenfläche der Vertiefung 13 an und wird dann in Richtung des Pfeils 30 verschwenkt, so daß es etwa unter einem rechten Winkel von der Grundfläche 4 vorsteht. Nachdem die plattenförmigen Einheit 11 an dem dreieckförmigen Plattenteil 28 befestigt ist, ermöglicht die Einheit in der Stellung, wie sie in Figur 7C gezeigt ist, eine Fortbewegung wie sie anhand der Ausführungsform der Figur 1 vorstehend erläutert wurde. Die Achse 29 dient hierbei dazu, der Einheit ein Lenkverhalten zu vermitteln, indem um die Achse 29 die plattenförmigen Einheit 11 in ihrer Winkelstellung zu dem Koffer 1 verändert werden kann. Weiterhin ist im Gegensatz zu der Ausführungsform der Figur 1 nur eine einzelne Laufrolle 14 an dem hinteren, freien Ende der plattenförmigen Einheit 11 vorgesehen.

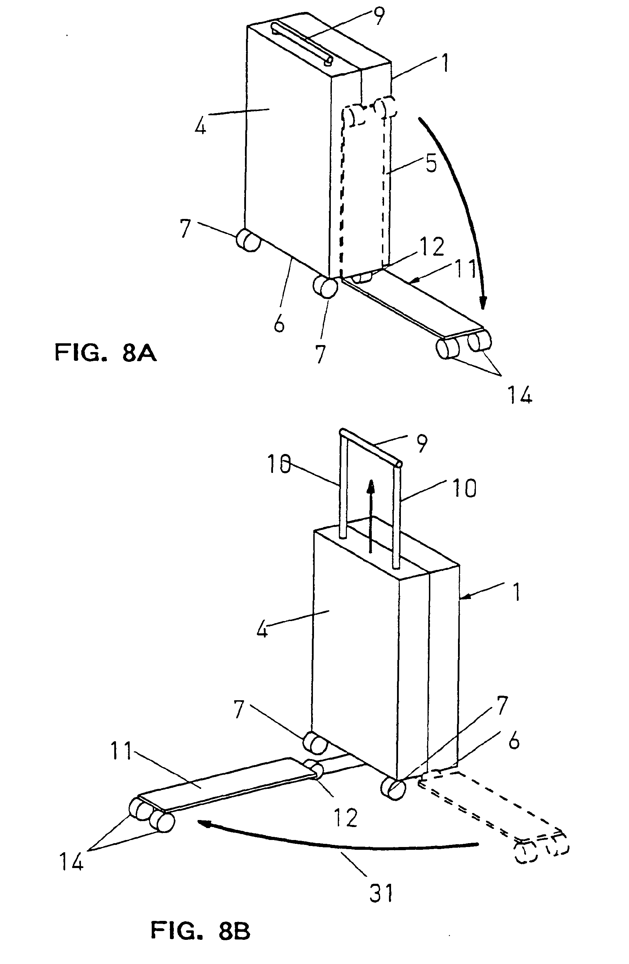

In den Figuren 8A und 8B ist die Möglichkeit aufgezeigt, die plattenförmigen Einheit 11 an einem Koffer 1 so zu halten, daß sie entweder für den Transport oder aber für die Fortbewegung unter Zuhilfenahme der plattenförmigen Einheit 11 entweder der schmalen Seitenfläche 5 (siehe Figur 8A) oder der Grundfläche 4 des Koffers 1 (siehe Figur 8B) zugeordnet werden kann. Hierzu ist an der Bodenfläche 6 des Koffers 1 eine Platte drehbar um eine Achse, die senkrecht zu der Bodenfläche verläuft, befestigt, die nicht näher dargestellt ist. Mittels dieser Platte, an der auch die Verbindungseinheit für die plattenförmigen Einheit 11 befestigt ist, kann die plattenförmige Einheit 11 zwischen der Stellung, wie sie in der Figur 8A gezeigt ist, und der Stellung, wie sie in der Figur 8B gezeigt ist, in Richtung des Doppelpfeils 30 verschwenkt werden. Die Figuren 8A und 8B zeigen nur den prinzipiellen Aufbau der Einheit, um die plattenförmigen Einheit 11 zwischen den zwei gezeigten Stellungen zu verändern. Ansonsten können die konstruktiven Maßnahmen bei dieser Ausführungsform eingesetzt werden, wie sie bereits anhand der Figuren 1 bis 7 beschrieben wurden.

Aus der vorstehenden Beschreibung der Ausführungsbeispiele ist ersichtlich, daß der Koffer 1 mit der plattenförmigen Einheit 11 eine Anordnung darstellt, mit der ein Koffer 1 mit einfachen Mitteln so umgerüstet werden kann, daß er eine fahrbare Einheit bildet, um einer reisenden Person zu ermöglichen, sich schnell fortbewegen zu können.

Soweit verschiedene Merkmale nur anhand einer Ausführungsform beschrieben wurden, sind solche Merkmale auch entsprechend auf die anderen Ausführungsformen übertragbar bzw. es können verschiedene Merkmale einer Ausführungsform mit denjenigen einer anderen Ausführungsform kombiniert werden.

## Patentansprüche

1. Koffer mit mindestens einem Griff und mindestens zwei einer Seitenkante einer Bodenfläche des Koffers zugeordneten, eine Transporthilfe bildenden Transportrollen und mit einer an der Außenseite einer Seitenwand (4) des Koffers (1) in einer ersten Grundstellung anordbaren, plattenförmigen Einheit (11), die zu einer zweiten Grundstellung durch eine erste Schwenkachse (12) bringbar ist derart, daß sie bei auf der Bodenfläche (6) aufstehendem Koffer (1) in einem Winkel > 45° orientierbar ist, wobei die plattenförmige Einheit (11) an ihrem freien Ende mindestens eine Laufrolle (14) aufweist, deren Achse in der zweiten Grundstellung der plattenförmigen Einheit (11) parallel zu den Achsen (2) der Transportrollen (7) verläuft und die in der zweiten Grundstellung die plattenförmige Einheit (11) stützt, so daß die plattenförmige Einheit (11) in der zweiten Grundstellung eine Standfläche zum Aufsetzen des Fußes einer Person bildet, **dadurch gekennzeichnet, daß** die plattenförmige Einheit (11) in der zweiten Grundstellung um eine zweite Schwenkachse (21) schwenkbar gehalten ist, die senkrecht zu der ersten Schwenkachse (12) verläuft.

2. Koffer nach Anspruch 1, **dadurch gekennzeichnet, daß** die plattenförmige Einheit (11) von der ersten Grundstellung zu der zweiten Grundstellung durch die erste Schwenkachse (12) geführt ist und daß diese erste Schwenkachse (12) parallel zu den Achsen (8) der Transportrollen (7) ausgerichtet ist

3. Koffer nach Anspruch 1, **dadurch gekennzeichnet, daß** die Transportrolien (7) mittig zu der einen Seitenwand (4) des Koffers (1) ausgerichtet sind.

4. Koffer nach Anspruch 1, **dadurch gekennzeichnet, daß** die Transportrollen (7) zu einer Transportwalze zusammengefaßt sind.

5. Koffer nach Anspruch 1, **dadurch gekennzeichnet, daß** der Winkel zwischen der plattenförmigen Einheit (11) und der Seitenwand (4) in der zweiten Grundstellung etwa 90° beträgt.

6. Koffer nach Anspruch 1, **dadurch gekennzeichnet, daß** die zweite Schwenkachse (21) etwa parallel zur Fläche der Seitenwand (4) verläuft.

7. Koffer nach Anspruch 1, **dadurch gekennzeichnet, daß** die zweite Schwenkachse (21) etwa parallel zur Flache der plattenförmigen Einheit (11) verläuft.

8. Koffer nach Anspruch 1, **dadurch gekennzeichnet, daß** der mindestens eine Griff (9) des Koffers (1) in der zweiten Grundstellung der plattenförmigen Einheit (11) derjenigen Seitenwand (4) zugeordnet ist, zu der die plattenförmige Einheit (11) unter einem Winkel ausgerichtet ist, wobei dieser Griff (9) als Lenkhilfe dient.

9. Koffer nach Anspruch 8, **dadurch gekennzeichnet, daß** der Griff (9) ausziehbar geführt und in der ausgezogenen Stellung arretierbar ist.

10. Koffer nach Anspruch 1, **dadurch gekennzeichnet, daß** der Koffer (1) eine Vertiefung (13) aufweist, in die die plattenförmige Einheit(11) einlegbar ist,

11. Koffer nach Anspruch 2, **dadurch gekennzeichnet, daß** der Bodenfläche (6) des Koffers eine Halteplatte zugeordnet ist, die drehbar geführt ist, wobei an dieser Halteplatte die plattenförmige Einheit (11) mit ihrer Schwenkachse (12) befestigt ist, so daß die plattenförmige Einheit (11) beim Transport des Koffers (1) einer Seitenwand (4 ; 5) zuordenbar ist, die eine andere ist als diejenige, der die plattenförmige Einheit (11) in der zweiten Grundstellung zugeordnet ist.

12. Koffer nach Anspruch 1, **dadurch gekennzeichnet, daß** die erste und die zweite Schwenkachse (12 ; 21) durch ein einzelnes Gelenk gebildet sind.

## Claims

1. Suitcase with at least one handle and at least two transport rollers forming a transport aid assigned to a side edge of a bottom surface of the suitcase, and a plate-shaped unit (11) which can be arranged at the outer side of a side wall (4) of the suitcase (1) in a first basic position, which can be brought through a first swivel axis (12) to a second basic position in such a manner that it can be oriented with an angle > 45° with a suitcase (1) standing on the bottom surface (6), whereby the plate-shaped unit (11) comprises at least one castor (14) at its free end, the axis of which runs parallel to the axes (2) of the transport rollers (7) in the second basic position of the plate-shaped unit (11) and which supports the plate-shaped unit (11) in the second basic position, so that the plate-shaped unit (11) forms a base for attaching the foot of a person in the second basic position, **characterised in that** the plate-shaped unit (11) is held in a swivelling manner around a second swivel axis (21) in the second basic position, which axis runs perpendicular to the first swivel axis (12).

2. Suitcase according to claim 1, **characterised in that** the plate-shaped unit (11) is guided from the first basic position to the second basic position by means of the first swivel axis (12) and that this first swivel axis (12) is aligned parallel to the axes (8) of the transport rollers (7).

3. Suitcase according to claim 1, **characterised in that** the transport rollers (7) are aligned central to the one side wall (4) of the suitcase (1).

4. Suitcase according to claim 1, **characterised in that** the transport rollers (7) are combined to a carrier roller.

5. Suitcase according to claim 1, **characterised in that** the angle between the plate-shaped unit (11) and the side wall (4) is about 90° in the second basic position.

6. Suitcase according to claim 1, **characterised in that** the second swivel axis (21) runs approximately parallel to the surface of the side wall (4).

7. Suitcase according to claim 1, **characterised in that** the second swivel axis (21) runs approximately parallel to the surface of the plate-shaped unit (11).

8. Suitcase according to claim 1, **characterised in that** the at least one handle (9) of the suitcase (1) in the second basic position of the plate-shaped unit (11) is assigned to the side wall (4) to which the plate-shaped unit (11) is aligned at an angle, whereby this handle (9) serves as a steering aid.

9. Suitcase according to claim 8, **characterised in that** the handle (9) is guided in an extendable manner and can be locked in the extended position.

10. Suitcase according to claim 1, **characterised in that** the suitcase (1) comprises a recess (13) into which the plate-shaped unit (11) can be inserted.

11. Suitcase according to claim 2, **characterised in that** a holding plate is assigned to the bottom surface (6) of the suitcase, which plate is guided in a rotatable manner, whereby the plate-shaped unit (11) with its swivel axis (12) is mounted to this holding plate, so that the plate-shaped unit (11) can be assigned to a side wall (4; 5) during the transport of the suitcase (1), which wall is a different one than the one which is assigned to the plate-shaped unit (11) in the second basic position.

12. Suitcase according to claim 1, **characterised in that** the first and the second swivel axis (12; 21) are formed by a single joint.

## Revendications

1. Valise avec au moins une poignée et au moins deux roulettes de transport constituant des moyens de transport disposées sur un bord latéral d'un fond de la valise et avec une unité en forme de plaque (11) dans le côté extérieur d'une paroi latérale (4) de la valise (1) qui peut être placée dans une première position normale, qui peut être amenée dans une deuxième position normale grâce à un premier axe de pivotement (12), de sorte qu'elle peut être orientée avec un angle supérieur à 45° par rapport à la valise (1) qui se tient sur le fond (6), l'unité en forme de plaque (11) présentant à son extrémité libre au moins une roulette (14) dont l'axe s'étend parallèlement à l'axe (2) des roulettes de transport (7) dans la deuxième position normale de l'unité en forme de plaque (11) et qui supporte l'unité en forme de plaque (11) dans la deuxième position normale, de telle sorte que l'unité en forme de plaque (11), dans la deuxième position normale, constitue une surface de support pour les pieds d'une personne, **caractérisée en ce que** l'unité en forme de plaque (11), dans la deuxième position normale, est maintenue de façon pivotante autour d'un deuxième axe de pivotement (21), qui s'étend perpendiculairement au premier axe de pivotement (12).

2. Valise selon la revendication 1, **caractérisée en ce que** l'unité en forme de plaque (11) est guidée de la première position normale vers la deuxième position normale grâce au premier axe de pivotement (12) et **en ce que** ce premier axe de pivotement (12) est disposé parallèlement à l'axe (8) des roulettes de transport (7).

3. Valise selon la revendication 1, **caractérisée en ce que** les roulettes de transport (7) sont alignées axialement avec la première paroi latérale (4) de la valise (1).

4. Valise selon la revendication 1, **caractérisée en ce que** les roulettes de transport (7) sont fixées sur un axe de transport.

5. Valise selon la revendication 1, **caractérisée en ce que** l'angle entre l'unité en forme de plaque (11) et la paroi latérale (4) dans la deuxième position normale est d'environ 90°.

6. Valise selon la revendication 1, **caractérisée en ce que** le deuxième axe de pivotement (21) s'étend de manière sensiblement parallèle à la surface de la paroi latérale (4).

7. Valise selon la revendication 1, **caractérisée en ce que** le deuxième axe de pivotement (21) s'étend de manière sensiblement parallèle à la surface de l'unité en forme de plaque (11).

8. Valise selon la revendication 1, **caractérisée en ce que** la poignée (9) de la valise (1), dans la deuxième position normale de l'unité en forme de plaque (11), est associée à la paroi latérale (4) avec laquelle l'unité en forme de plaque (11) forme un angle, cette poignée (9) servant de moyens de direction.

9. Valise selon la revendication 8, **caractérisée en ce que** la poignée (9) est guidée de façon coulissante et peut être arrêtée dans la position sortie.

10. Valise selon la revendication 1, **caractérisée en ce que** la valise (1) présente un renfoncement (13), dans lequel peut être logée l'unité en forme de plaque (11).

11. Valise selon la revendication 2, **caractérisée en ce que** le fond (6) est équipé d'une plaque de maintien, qui est guidée de façon orientable, l'unité en forme de plaque (11) avec son axe de pivotement (12) étant fixée sur cette plaque de maintien, de sorte que l'unité en forme de plaque (11), lors du transport de la valise (1), peut être associée à une paroi latérale (4 ; 5) qui est différente de celle à laquelle l'unité en forme de plaque (11) est associée dans la deuxième position normale.

12. Valise selon la revendication 1, **caractérisée en ce que** le premier et le deuxième axe de pivotement (12 ; 21) sont constitués par une unique articulation.
